# FASCICULE DE BREVET EUROPEEN

(11) **EP 0 877 691 B1**
(45) Date de publication et mention de la délivrance du brevet: **27.03.2002**
(21) Numéro de dépôt: 96941693.2
(22) Date de dépôt: 04.12.1996
(51) Int. Cl.: B60T 13/57

(54) **SERVOMOTEUR PNEUMATIQUE D'ASSISTANCE AU FREINAGE A CLAPET PERFECTIONNE**
BREMSKRAFTVERSTÄRKER MIT VERBESSERTEM VENTIL
BRAKING ASSISTANCE PNEUMATIC SERVOMOTOR WITH IMPROVED VALVE

(30) Priorité: 30.01.1996 FR 9601042
(43) Date de publication de la demande: 18.11.1998
(73) Titulaire: Bosch Systemes de Freinage, 93700 Drancy (FR)
(72) Inventeur: LEVRAI, Roland, F-93240 Stains (FR)
(86) Numéro de dépôt international: FR9601930
(87) Numéro de publication internationale: WO9728034

(56) Documents cités:
- EP-A- 0 448 417
- EP-A- 0 509 867
- DE-A- 4 227 286

## Description

La présente invention concerne les servomoteurs pneumatiques, du type de ceux qui sont utilisés pour fournir une assistance au freinage des véhicules automobiles.

De tels servomoteurs sont bien connus dans la technique automobile et comportent de façon classique une enveloppe à l'intérieur de laquelle se trouve un piston formé d'un moyeu et d'une jupe. Le piston définit une chambre avant reliée en permanence à une source de basse pression et une chambre arrière reliée sélectivement à la chambre avant ou à une source de haute pression par un moyen de valve. Ce moyen de valve est actionné par une tige de commande susceptible de s'appuyer, par l'intermédiaire de la face avant d'un plongeur, sur la face arrière d'un disque de réaction solidaire d'une tige de poussée, cette dernière actionnant un maître-cylindre. Le moyen de valve comporte habituellement un clapet dont la face avant annulaire coopère avec un premier siège de valve circulaire formé sur le plongeur et un second siège de valve circulaire formé sur le piston et de diamètre supérieur à celui du premier siège de valve. Le clapet est formé d'une membrane souple fixée de façon étanche par son bord périphérique extérieur au piston, la face avant annulaire du clapet étant sollicitée vers l'avant par un ressort de clapet.

De tels servomoteurs, présentent plusieurs inconvénients. C'est ainsi que, pour éviter que la tige de commande n'ait une course morte trop longue, on est obligé de concevoir le moyen de valve de façon telle que la "levée de clapet" entre le clapet et le premier siège de valve soit la plus faible possible. Il s'ensuit donc que, lors d'un actionnement, le passage offert à l'air sous haute pression vers la chambre arrière est réduit, de même que le passage offert à l'air de la chambre arrière vers la chambre avant lors du défreinage.

Un inconvénient dû à ces passages d'air réduits et turbulents réside dans le fait que l'air se trouve fortement ralenti dans ses différents mouvements entre l'atmosphère, la chambre arrière et la chambre avant, et donc que les servomoteurs connus présentent des temps de réponse importants.

Il en résulte également que le fonctionnement de ces servomoteurs est accompagné de bruits d'aspiration d'air, qui peuvent devenir gênants, d'autant plus que la structure du moyeu du piston, présentant un seul passage radial vers la chambre arrière et un seul passage axial vers la chambre avant, induit des turbulences importantes dans l'air en mouvement.

De plus, à cause de la disposition concentrique et sensiblement coplanaire des deux sièges de valve, la membrane souple de l'élément de clapet est soumise à une différentielle de pression variable entre la haute pression sensiblement constante régnant en permanence à l'intérieur du moyeu tubulaire, autour de la tige d'entrée, et la pression variable régnant dans la chambre annulaire entourant cette partie de la membrane souple de l'élément de clapet, sur une partie de laquelle s'exerce la pression régnant dans la chambre avant du servomoteur, et sur une autre partie de laquelle s'exerce la pression variable régnant dans la chambre arrière du servomoteur.

Cette différentielle de pression, présente au repos et en phase de relâchement de freinage, induit sur la face avant annulaire de l'élément de clapet une force axiale s'ajoutant à la force du ressort de valve et que doit vaincre le plongeur de valve lors de chaque phase de relâchement du freinage pour dégager la face avant annulaire de l'élément de clapet du premier siège de clapet formé dans le moyeu et rétablir la communication entre la chambre de travail arrière du servomoteur et la chambre de dépression, ce qui impose un surdimensionnement du ressort de rappel de la tige d'entrée se traduisant notamment par un effort important à fournir par le conducteur pour la mise en oeuvre du servomoteur, cet effort étant connu dans la technique sous le terme "d'effort d'attaque".

Le document FR-A-2 537 524 tente d'apporter une solution en prévoyant des passages d'air de section agrandie, mais il comporte encore un moyen de valve classique logé dans la partie centrale tubulaire formée à l'arrière de l'enveloppe du servomoteur, coopérant avec un plongeur modifié, présentant une surface importante soumise à la différentielle de pression et exigeant donc un effort d'attaque important. De plus, selon ce document, non seulement l'enveloppe du servomoteur doit être de conception spéciale, mais encore la structure du moyeu de piston présente un seul passage radial vers la chambre arrière et un seul passage axial vers la chambre avant, induisant également des turbulences importantes dans l'air en mouvement, nuisibles pour le temps de réponse du servomoteur par le ralentissement de l'air qu'elles imposent, et génératrices de bruits de fonctionnement.

La présente invention se place dans ce contexte et a pour objet de proposer un servomoteur dans lequel les passages d'air entre l'atmosphère et la chambre arrière d'une part, la chambre arrière et la chambre avant d'autre part, aient la plus grande section possible sans présenter d'obstacles pouvant engendrer des turbulences de façon à obtenir un fonctionnement silencieux et un temps de réponse aussi faible que possible, et ce de façon simple, fiable et économique en utilisant une enveloppe de servomoteur de conception classique.

Dans ce but, la présente invention propose un servomoteur pneumatique d'assistance au freinage, comportant une enveloppe possédant un axe de symétrie, séparée de façon étanche par au moins une structure de paroi mobile en au moins une chambre avant reliée en permanence à une source de basse pression, et au moins une chambre arrière reliée sélectivement à la chambre avant ou à une source de haute pression par un moyen de valve à trois voies actionnée par une tige de commande, la valve à trois voies comportant un élément de clapet coopérant par une face annulaire avec un premier siège annulaire de clapet fonné sur un plongeur coulissant dans un alésage d'un piston, la face annulaire de l'élément de clapet étant sollicitée vers l'avant en direction du siège annulaire de clapet par un ressort de clapet.

Selon la présente invention, la valve à trois voies comporte un second élément de clapet coopérant par une face annulaire avec un second siège annulaire de clapet formé sur le plongeur, la face annulaire du second élément de clapet étant sollicitée vers l'arrière en direction du second siège annulaire de clapet par un second ressort de clapet.

De façon avantageuse, les premier et second sièges annulaires de clapet sont formés sur des épaulements radiaux du plongeur.

Selon des caractéristiques également avantageuses, les premier et second sièges annulaires de clapet sont contenus dans des plans perpendiculaires à l'axe de symétrie du plongeur et éloignés d'une distance axiale prédéterminée

De façon préférentielle, la valve à trois voies comporte de plus une structure de butée comprenant deux épaulements radiaux éloignés axialement d'une distance légèrement inférieure à la distance axiale entre les plans des premier et second sièges annulaires de clapet, pour déterminer la position extrême vers l'avant de l'élément de clapet et la position extrême vers l'arrière du second élément de clapet. La structure de butée peut alors comporter des passages axiaux formés dans les épaulements radiaux et des ouvertures radiales formées entre les épaulements radiaux, ces passages et ouvertures étant alignés en direction axiale avec des passages radiaux formés dans le piston et communiquant avec la chambre arrière du servomoteur. Le piston peut également comporter des passages axiaux débouchant dans l'alésage dans lequel coulisse le plongeur et communiquant avec la chambre avant du servomoteur, ces passages axiaux étant alignés avec les passages radiaux communiquant avec la chambre arrière du servomoteur.

Selon un mode de réalisation, la valve à trois voies est disposée dans une partie tubulaire arrière du piston solidaire de la structure de paroi mobile du servomoteur.

Selon un autre mode de réalisation, la valve à trois voies est disposée dans un piston d'un module de commande pilotant à distance le servomoteur.

De façon avantageuse, le module de commande comporte un piston étagé divisant un alésage en un premier volume relié en permanence à la chambre arrière du servomoteur par une canalisation, en un second volume relié en permanence à la chambre avant du servomoteur par une canalisation, et en une chambre annulaire d'assistance reliée par une canalisation à la sortie d'un émetteur de pression actionné par le servomoteur.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de côté. en coupe longitudinale, d'un servomoteur pneumatique d'assistance au freinage, équipé d'un clapet réalisé conformément à la présente invention;
- La Figure 2 représente une vue à plus grande échelle de la partie centrale arrière du servomoteur de la Figure 1;
- La Figure 3 représente une vue de côté, en coupe longitudinale, d'un module de commande d'un servomoteur pneumatique d'assistance au freinage, ce module étant équipé d'un clapet réalisé conformément à la présente invention; et
- La Figure 4 représente une vue à plus grande échelle de la partie centrale arrière du module de commande de la Figure 3.

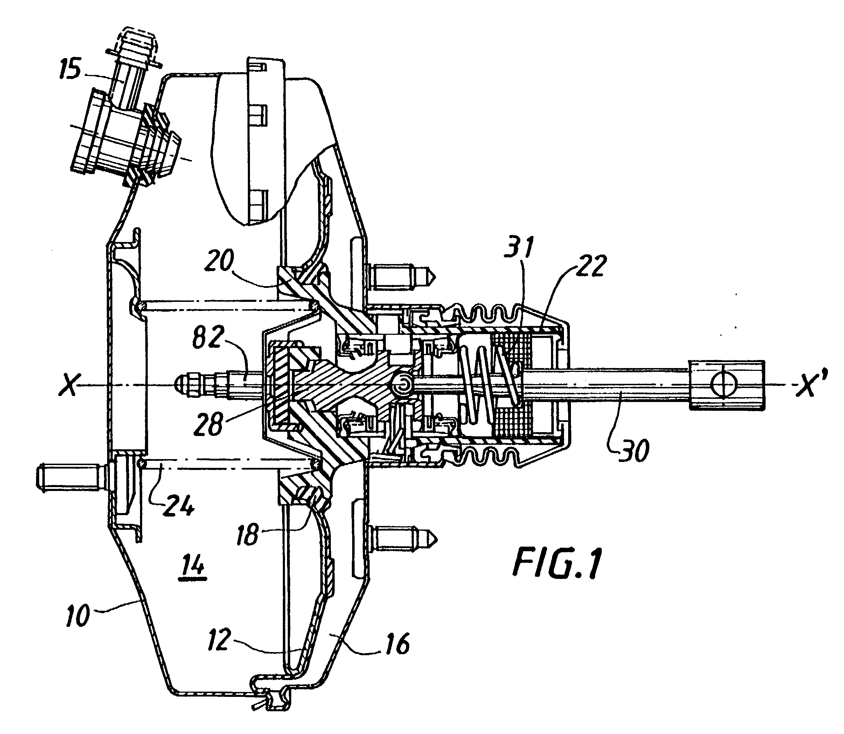

La Figure 1 représente une vue en coupe d'un servomoteur pneumatique d'assistance au freinage prévu pour être placé de façon conventionnelle entre la pédale de frein d'un véhicule et la maître-cylindre commandant la pression dans le circuit de freinage hydraulique de ce véhicule.

Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

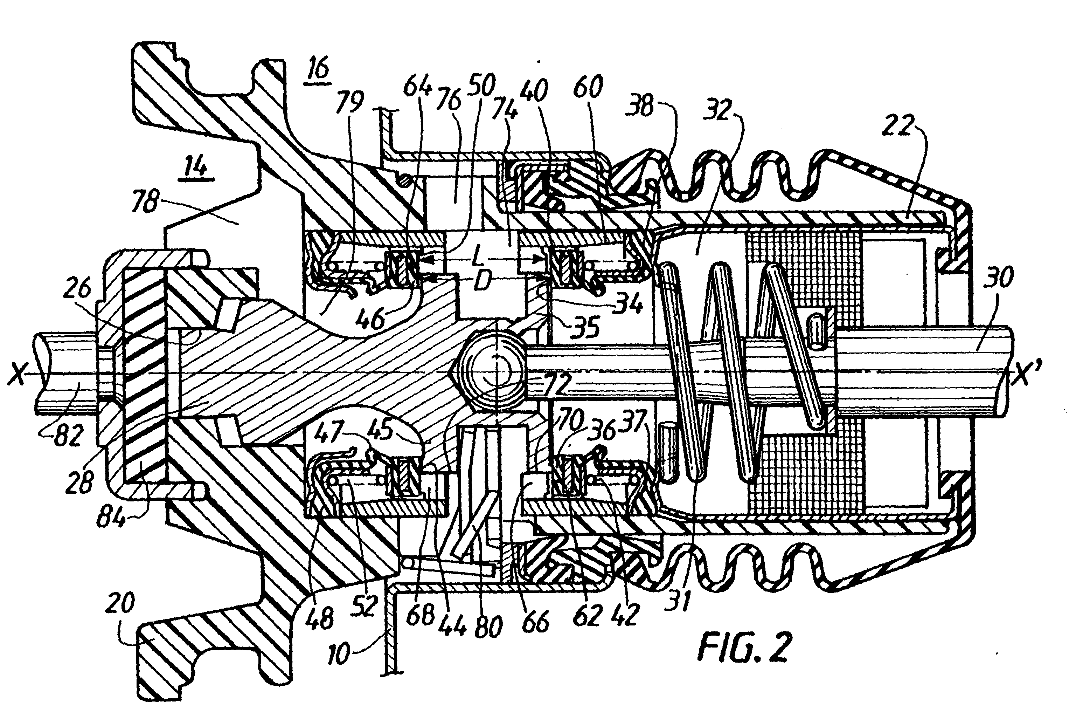

Le servomoteur représenté sur les Figures 1 et 2 comprend un enveloppe extérieure 10 en forme de coquille, présentant une symétrie de révolution autour d'un axe X-X'. Seule la partie centrale arrière de cette enveloppe 10 est représentée sur la Figure 2.

Une structure de paroi mobile 12 délimite à l'intérieur de l'enveloppe 10 une chambre avant 14, reliée en permanence à une source de dépression par une canalisation 15, et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20, solidaire de la structure de paroi mobile 12, et disposé selon l'axe X-X' du servomoteur, le bord périphérique extérieur de la membrane souple étant fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant de l'enveloppe 10 maintient normalement le piston 20 dans la position arrière de repos illustrée sur les Figures 1 et 2, dans laquelle la chambre arrière 16 présente son volume minimal et la chambre avant 14 son volume maximal.

Un plongeur 28, symétrique par rapport à l'axe X-X', est reçu à coulissement par son extrémité avant dans un alésage 26, éventuellement étagé, formé dans la partie centrale du piston 20. L'extrémité avant d'une tige de commande 30 du servomoteur, disposée également selon l'axe X-X', est montée rotulante dans un alésage borgne du plongeur 28. L'extrémité arrière de la tige de commande 30 est commandée directement, par la pédale de frein du véhicule (non représentée), et est rappelée dans sa position de repos par un ressort de rappel 31 en appui à l'intérieur de la partie tubulaire 22.

De façon classique, lorsque le conducteur du véhicule appuie sur la pédale de frein, la tige de commande 30 actionne un moyen de valve à trois voies pour faire communiquer l'espace annulaire 32 autour de la tige de commande 30 avec la chambre arrière 16, et ainsi créer une différence de pressions de part et d'autre de la paroi mobile 12, résultant en une force d'assistance proportionnelle à l'effort exercé sur la pédale de frein.

De façon également classique, le moyen de valve à trois voies comporte un premier passage de valve entre l'espace annulaire 32 autour de la tige de commande 30 et la chambre arrière 16, et un second passage de valve entre la chambre arrière 16 et la chambre avant 14.

Conformément à la présente invention, le premier passage de valve comporte un premier siège annulaire de clapet 34 formé sur un épaulement radial 35 à l'arrière du plongeur 28 et coopérant avec un premier élément de clapet annulaire 36.

Le premier clapet 36 constitue l'extrémité avant d'un manchon tubulaire souple 37 en élastomère dont l'extrémité arrière 38 est fixée de façon étanche dans la partie tubulaire 22, et il présente une face avant annulaire 40 mobile suivant l'axe X-X', cette face avant étant sollicitée vers l'avant par un premier ressort de clapet 42.

Le second passage de valve comporte un second siège annulaire de clapet 44 formé sur un épaulement radial 45 du plongeur 28 en avant de l'épaulement radial 35, et coopérant avec un second élément de clapet annulaire 46.

Le second clapet 46 constitue l'extrémité arrière d'un manchon tubulaire souple 47 en élastomère dont l'extrémité avant 48 est fixée de façon étanche dans la partie tubulaire 22, et il présente une face arrière annulaire 50 mobile suivant l'axe X-X', cette face avant étant sollicitée vers l'arrière par un second ressort de clapet 52.

Les sièges annulaires de clapet 34 et 44 formés sur les épaulements radiaux 35 et 45 du plongeur 28 sont contenus dans des plans perpendiculaires à l'axe X-X' éloignés axialement d'une distance D.

Une structure de butée tubulaire 60 est disposée dans la partie tubulaire 22, par exemple entre les extrémités 38 et 48 des manchons 37 et 47, et comporte deux épaulements radiaux 62 et 64 faisant face respectivement vers l'arrière et vers l'avant et éloignés axialement d'une distance L légèrement inférieure à la distance D, de façon à déterminer la position extrême vers l'avant du premier élément de clapet 36 et la position extrême vers l'arrière du second élément de clapet 46.

Les épaulements radiaux 62 et 64 sont crénelés et comportent des passages axiaux 66 et 68 respectivement, régulièrement répartis angulairement autour de l'axe X-X'. Les surfaces périphériques intérieures 70 et 72 des épaulements 62 et 64 respectivement sont concentriques, d'axe commun X-X', et forment des surfaces de guidage pour les surfaces périphériques extérieures des épaulements radiaux 35 et 45 respectivement du plongeur 28.

Entre les épaulements radiaux 62 et 64, la structure de butée tubulaire 60 comporte des ouvertures radiales 74, régulièrement réparties autour de l'axe X-X', communiquant avec des passages radiaux 76 formées dans la partie tubulaire 22 du piston 20 et débouchant dans la chambre arrière 16 du servomoteur.

Le piston 20 est également formé avec des passages axiaux 78, régulièrement répartis autour de l'axe X-X', et faisant communiquer la chambre avant 14 du servomoteur avec la partie avant 79 du volume intérieur de l'alésage 26 autour du plongeur 28, en avant de l'épaulement 64.

Enfin, au moins un organe de butée 80 est monté dans la partie tubulaire 22 du piston 20 pour délimiter la course axiale du plongeur 28 par rapport au piston 20 et définir sa position arrière de repos par rapport à ce dernier. L'organe de butée 80 traverse par exemple les ouvertures 74 et les passages 76 pour former un appui à la face arrière de l'épaulement 45 du plongeur 28.

En position de repos, les différents composants du servomoteur occupent les positions relatives illustrées sur les Figures 1 et 2. Dans cette position, le plongeur 28 est en appui vers l'arrière sur l'organe de butée 80 sous l'effet de la sollicitation du ressort 31. Le premier siège de clapet annulaire 34 est en appui sur le premier élément de clapet 36 et maintient ce dernier éloigné de l'épaulement radial 62 d'une distance égale à la différence D-L, augmentée d'une quantité Δ.

Dans cette position de repos, le second élément de clapet 46 est en appui sur l'épaulement radial 64 sous l'action du ressort 52, le second siège de clapet 44 étant écarté du second élément de clapet 46 de la quantité Δ. Les chambres avant 14 et arrière 16 du servomoteur communiquent ainsi par l'intermédiaire des passages axiaux 78, le volume annulaire 79, le passage de valve 44-46, les passages axiaux 68, les ouvertures radiales 74 et les passages radiaux 76. Les chambres 14 et 16 sont par ailleurs isolées de l'espace annulaire 32 par le passage de valve 34-36, fermé en position de repos.

Pour obtenir une action de freinage, le conducteur du véhicule appuie sur la pédale de frein, ce qui résulte en un mouvement vers l'avant de la tige de commande 30 et du plongeur 28. Ce dernier coulisse dans l'alésage 26 et entre les surfaces de guidage 70 et 72, et, dans un premier temps, avance sensiblement de la distance Δ Pendant ce mouvement, le second siège de clapet 44 vient en appui sur le second élément de clapet 46, qu'il soulève légèrement de l'épaulement 64, isolant ainsi les deux chambres 14 et 16 l'une de l'autre, tandis que le premier élément de clapet 36, tout en restant en appui sur le premier siège de clapet 34, vient au contact de l'épaulement 62. Les deux passages de valve 34-36 et 44-46 sont alors fermés.

Le mouvement vers l'avant de la tige de commande 30 et du plongeur 28 se poursuivant, le second siège de clapet 44 entraîne vers l'avant le second élément de clapet 46 à l'encontre de l'action du ressort 52, en maintenant donc le second passage de valve 44-46 fermé, tandis que le premier siège de clapet 34 s'éloigne du premier élément de clapet 36, en butée sur l'épaulement 62, ouvrant ainsi le premier passage de valve 34-36.

L'air à la pression atmosphérique dans le volume annulaire 32 peut ainsi parvenir dans la chambre arrière 16 par le passage de valve 34-36, les passages axiaux 66, les ouvertures radiales 74 et les passages radiaux 76.

De façon avantageuse grâce à la présente invention, les passages axiaux 66, les ouvertures radiales 74 et les passages radiaux 76 sont alignés en direction axiale et s'étendent sur des arcs de cercle de même angle au centre. On comprend donc qu'on pourra donner à ces ouvertures des étendues angulaires relativement importantes, puisque les différents éléments composant la valve à trois voies qu'on vient de décrire ne sont soumis qu'à des efforts relativement peu élevés, et n'ont donc pas besoin d'avoir une résistance mécanique très élevée.

De plus, on voit que les deux passages de valve, entre l'atmosphère et la chambre arrière d'une part, et entre la chambre arrière et la chambre avant d'autre part, sont situés dans des plans transversaux différents, et ne sont plus coplanaires comme dans la conception classique de l'art antérieur. Il s'ensuit que le diamètre du passage de valve 34-36 est indépendant de celui du passage de valve 44-46, et n'est limité que par le diamètre de la partie tubulaire 22 ou par celui de la structure de butée 60. On pourra donc donner au passage de valve 34-36 un diamètre relativement important, résultant en une section de passage de l'air d'autant plus importante.

Grâce aux passages d'air de section agrandie, la pression peut ainsi augmenter relativement rapidement dans la chambre arrière 16 du servomoteur et créer une différence de pressions sur la paroi mobile 12, résultant en une force d'assistance croissant rapidement pour la déplacer vers l'avant, cette force étant transmise à une tige de poussée 82 par une face avant annulaire du piston 20 agissant sur un disque de réaction 84, sur la partie centrale duquel est en appui la face avant du plongeur 28. On a donc bien réalisé un servomoteur dont le temps de réponse est réduit dans des proportions importantes.

On comprendra que le même phénomène de réduction du temps de réponse du servomoteur se produit lors d'un défreinage. En effet. lorsque la force appliquée à la tige de commande 30 décroît, celle-ci recule et entraîne dans son mouvement le plongeur 28. Dans ce mouvement de recul, le premier siège de clapet 34 du plongeur 28 revient au contact du premier élément de clapet 36, en appui sur l'épaulement 62, le second siège de clapet 44 étant toujours au contact du second élément de clapet 46 Les deux chambres 14 et 16 sont alors isolées l'une de l'autre et de l'atmosphère extérieure

Puis, le second élément de clapet 46 vient en appui sur l'épaulement 64, tandis que le premier élément de clapet 36 est soulevé de l'épaulement 62, et, le plongeur 28 continuant de reculer, le second siège de clapet 44 s'éloigne du second élément de clapet 46, qui reste en appui sur l'épaulement 64.

L'air contenu dans la chambre arrière 16 est alors aspiré dans la chambre avant 14 par les passages radiaux 76, les ouvertures radiales 74, le passage de valve 44-46, le volume annulaire 79 et les passages axiaux 78.

Pour permettre un re-équilibrage rapide de pression (en l'occurrence de dépression) entre ces deux chambres 14 et 16, le plongeur 28 est autorisé à reculer d'une distance relativement importante vis à vis du piston 20. On voit donc là encore que l'air est amené à s'écouler à travers le passage de valve 44-46, d'un diamètre nettement supérieur aux passages de valve classiques, et donc de surface supérieure qui permet un débit supérieur, d'où il résulte un temps de réponse très réduit en phase de défreinage.

De plus, comme on l'a vu pour la phase d'actionnement, le diamètre du passage de valve 44-46 n'est limité que par le diamètre de la partie tubulaire 22 ou par celui de la structure de butée 60. On pourra donc donner au passage de valve 44-46 un diamètre relativement important, résultant en une section de passage de l'air d'autant plus importante.

On voit donc que grâce à la disposition des sièges de clapet 34 et 44 formés tous deux sur les épaulements radiaux 35 et 45 du plongeur, le débit de fluide entre l'atmosphère et la chambre arrière, et entre la chambre arrière et la chambre avant, est augmenté dans des proportions notables, diminuant d'autant le temps de réponse du servomoteur tant en phase de freinage qu'en phase de défreinage.

L'invention permet également de réduire dans des proportions importantes le bruit de fonctionnement du servomoteur. On a vu en effet que, lors du freinage, l'air s'écoule par le passage de valve 34-36, les passages axiaux 66, les ouvertures radiales 74 et les passages radiaux 76, et lors du défreinage, par les passages radiaux 76, les ouvertures radiales 74, le passage de valve 44-46, le volume annulaire 79 et les passages axiaux 78

La conception particulière de la valve à trois voies constituant le clapet selon l'invention permet de prévoir que les ouvertures ou passages 66, 74, 76 et 78 soient en nombre égal, régulièrement réparties autour de l'axe X-X', et de sorte que leurs centres soient dans un même plan, ainsi qu'on l'a représenté sur la Figure 2. De la sorte, les masses d'air mises en mouvement lors du fonctionnement du servomoteur équipé du clapet selon la présente invention auront une vitesse dont les composantes ne seront contenues que clans un plan, par exemple celui de la Figure 2.

En d'autres termes, l'écoulement de l'air dans le servomoteur est parfaitement symétrique autour de l'axe X-X' dans tous les cas de fonctionnement, c'est-à-dire que toutes les turbulences sont éliminées, ainsi que les bruits en résultant

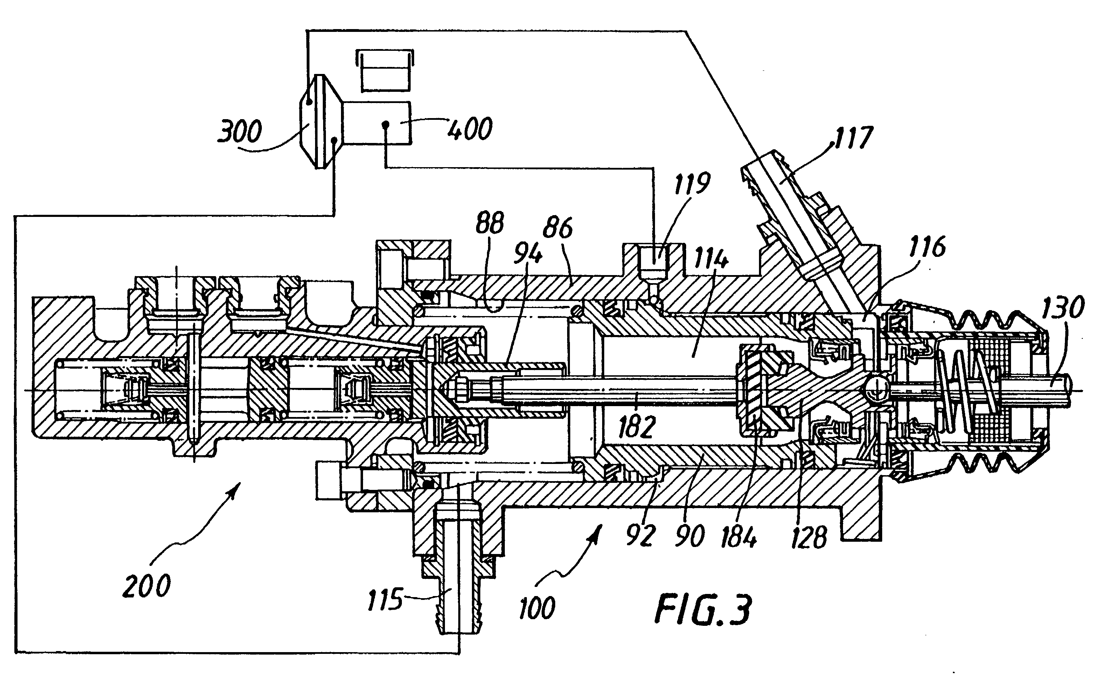

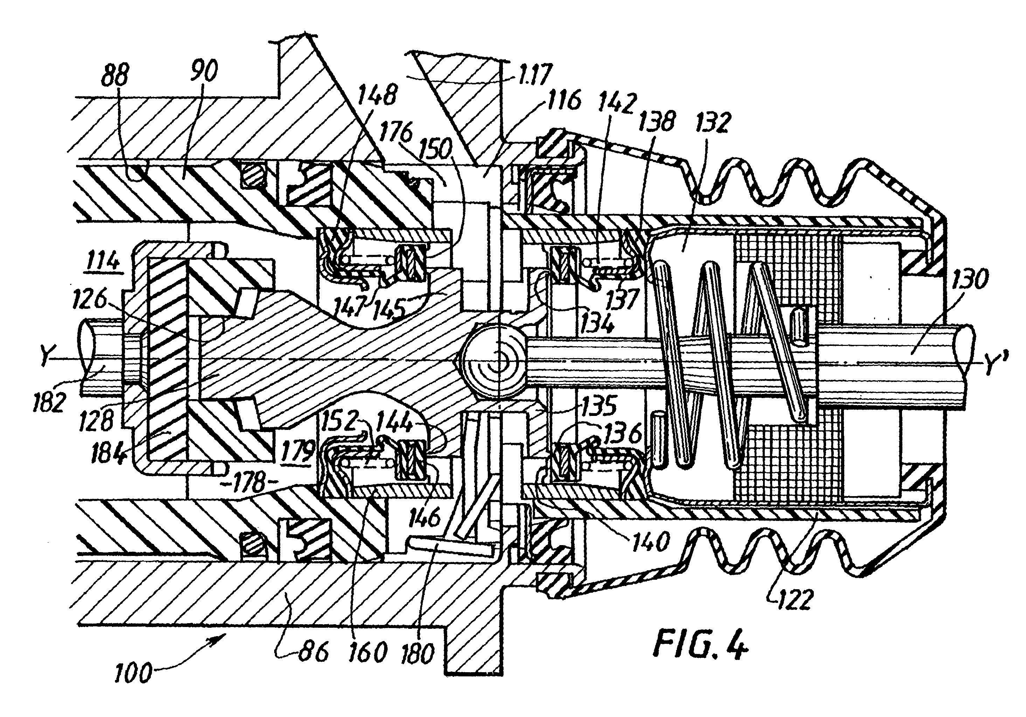

On a représenté sur les Figures 3 et 4 un second mode de réalisation de la présente invention, applicable à un module de commande 100 d'un servomoteur du type de celui qui est décrit par exemple dans le document EP-A-0 326 965 Sur ces Figures, les éléments correspondant à ceux des Figures 1 et 2 sont affectés des mêmes références numériques, augmentées d'une centaine.

Le module de commande 100 est actionné par une tige de commande 130 reliée à une pédale de frein (non représentée) située dans l'habitacle du véhicule. Le module 100 comporte un corps 86 présentant une symétrie de révolution autour d'un axe Y-Y' et formé avec un alésage étagé 88 dans lequel coulisse de façon étanche un piston étagé 90 Le piston 90 divise intérieurement l'alésage 88 en un premier volume 116 formé à l'arrière de l'alésage et un second volume 114 formé à l'avant, et relié en permanence à une source de dépression par une canalisation 115. Le piston 90 est prolongé vers l'arrière par une partie tubulaire arrière 122 coulissant de façon étanche dans le corps 86, et il est formé avec un alésage 126, éventuellement étagé, dans lequel coulisse un plongeur 128.

Le premier volume 116 est mis sélectivement en communication avec le second volume 114 ou avec l'espace annulaire 132 autour de la tige de commande 130 où règne par exemple la pression atmosphérique, par un clapet à trois voies conforme à celui qui a été décrit en relation avec les Figures 1 et 2, disposé dans un logement du piston 90, et actionné par un plongeur 128 solidaire de la tige de commande 130 et symétrique par rapport à l'axe Y-Y' du module de commande 100.

Comme pour le premier mode de réalisation de l'invention, un premier passage de valve comporte un premier siège annulaire de clapet 134 formé sur un épaulement radial 135 à l'arrière du plongeur 128 et coopérant avec un premier élément de clapet annulaire 136.

Le premier clapet 136 constitue l'extrémité avant d'un manchon tubulaire souple 137 en élastomère dont l'extrémité arrière 138 est fixée de façon étanche dans une partie tubulaire arrière 122 du piston 90, et il présente une face avant annulaire 140 mobile suivant l'axe X-X', cette face avant étant sollicitée vers l'avant par un premier ressort de clapet 142.

Le second passage de valve comporte un second siège annulaire de clapet 144 formé sur un épaulement radial 145 du plongeur 128 en avant de l'épaulement radial 135, et coopérant avec un second élément de clapet annulaire 146.

Le second clapet 146 constitue l'extrémité arrière d'un manchon tubulaire souple 147 en élastomère dont l'extrémité avant 148 est fixée de façon étanche dans la partie tubulaire arrière 122, et il présente une face arrière annulaire 150 mobile suivant l'axe X-X', cette face avant étant sollicitée vers l'arrière par un second ressort de clapet 152.

Une structure de butée tubulaire 160 identique à la structure 60 décrite plus haut joue le même rôle de guidage du plongeur 128 et de délimitation vers l'avant et vers l'arrière des positions extrêmes des premier et second clapets 136 et 146 respectivement, et ne sera donc pas décrite plus en détail.

Le piston 90 est également formé avec des passages axiaux 178, régulièrement répartis autour de l'axe X-X', et faisant communiquer le second volume 114 du module de commande 100 avec le volume 179 autour du plongeur 128, et un organe de butée 180 est monté dans le piston 90 pour délimiter la course axiale du plongeur 128 par rapport au piston 90 et définir sa position arrière de repos par rapport à ce dernier.

Comme on l'a représenté sur la Figure 3, le module de commande 100 est destiné à piloter à distance un servomoteur 300, représenté schématiquement, formé d'une enveloppe divisée intérieurement par une cloison mobile étanche en une chambre avant reliée en permanence au second volume 114 par la canalisation 115, et une chambre arrière reliée en permanence au premier volume 116 par une canalisation 117.

Un émetteur de pression tel qu'un maître-cylindre simple 400 est fixé sur la paroi avant du servomoteur 300 et est actionné par ce servomoteur. La sortie de cet émetteur de pression 400 est reliée par une canalisation hydraulique 119 à une chambre annulaire d'assistance 92 formée dans le corps 86 du module de commande 100 entre les épaulements de l'alésage étagé 88 et du piston étagé 90.

Selon cette conception, lorsque le conducteur du véhicule actionne la pédale de frein, la tige de commande 130 se déplace vers l'avant. Le plongeur 128 commande alors le fonctionnement du clapet à trois voies ainsi qu'on l'a décrit plus haut pour que celui-ci isole tout d'abord les volumes 114 et 116 l'un de l'autre, puis mette le premier volume 116 en communication avec l'espace annulaire 132. Il en résulte une augmentation de pression dans le volume 116, transmise par la canalisation 117 à la chambre arrière du servomoteur 300, dont la chambre avant est reliée en permanence à la source de dépression.

Cette différence de pression s'exerce sur les deux faces de la cloison mobile du servomoteur 300 et tend à la déplacer vers l'avant, de sorte qu'elle déplace le piston de l'émetteur de pression 400 et provoque une augmentation de pression dans la canalisation 119, transmise à la chambre annulaire d'assistance 92.

La pression dans la chambre annulaire 92 s'exerce sur l'épaulement du piston 90 et tend ainsi à le faire avancer. Le piston 90 comporte une face annulaire entourant la face avant du plongeur 128, ces deux faces étant en appui sur un disque de réaction 184 solidaire d'une tige de poussée 182. Le disque de réaction 184 reçoit donc simultanément l'effort d'entrée transmis par le plongeur 128 et l'effort d'assistance transmis par le piston 90 sur lequel s'exerce la pression dans la chambre 92. Le disque de réaction 184 et la tige de poussée 182 transmettent la somme de ces deux efforts au piston 94 d'un maître-cylindre 200, qui engendre alors une augmentation de pression dans les moteurs de frein (non représentés), ce qui provoque l'action de freinage assisté requise par le conducteur du véhicule.

Comme dans le mode de réalisation précédent, les passages axiaux et les ouvertures radiales formés sur la structure de butée 160, et les passages radiaux formés dans le piston 90 sont alignés en direction axiale et s'étendent sur des arcs de cercle de même angle au centre, de façon à leur donner des étendues angulaires relativement importantes, ces différents éléments n'étant soumis qu'à des efforts relativement peu élevés, et n'ayant donc pas besoin d'avoir une résistance mécanique très élevée.

De même, les deux passages de valve, entre l'atmosphère et le volume arrière 116 d'une part, et entre les volumes arrière 116 et avant 114 d'autre part, sont situés dans des plans transversaux différents, et leurs diamètres sont indépendants l'un de l'autre. On pourra encore leur donner des dimensions relativement importantes, résultant en une section de passage de l'air d'autant plus importante.

La pression peut ainsi augmenter relativement rapidement dans le volume arrière 116 du module de commande 100, et donc dans la chambre arrière du servomoteur 300, et créer une différence de pressions sur la paroi mobile, résultant en une pression hydraulique croissant rapidement dans la chambre d'assistance 92 pour déplacer le piston 90 vers l'avant. On a donc là encore réalisé un servomoteur piloté par un module de commande dont le temps de réponse est réduit dans des proportions importantes, aussi bien pour une action de freinage que lors d'un défreinage.

Le bruit de fonctionnement du module de commande est également réduit dans des proportions importantes. Comme on l'a vu plus haut, la conception particulière de la valve à trois voies constituant le clapet selon l'invention permet de prévoir que les différentes ouvertures de passage d'air soient en nombre égal, régulièrement réparties autour de l'axe X-X', et de sorte que leurs centres soient dans un même plan, comme on le voit sur la Figure 4. De la sorte, les masses d'air mises en mouvement lors du fonctionnement du module de commande équipé du clapet de la présente invention auront une vitesse dont les composantes ne seront contenues que dans un plan, par exemple celui de la Figure 4.

En d'autres termes, l'écoulement de l'air dans le module de commande est parfaitement symétrique autour de l'axe X-X' dans tous les cas de fonctionnement, c'est-à-dire que toutes les turbulences sont éliminées, ainsi que les bruits en résultant.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi, par exemple, que le mode de réalisation de l'invention illustré sur les Figures 1 et 2 est bien entendu applicable de la même façon à des servomoteurs de type tandem ou à chambres additionnelles.

## Revendications

1. Servomoteur pneumatique d'assistance au freinage, comportant une enveloppe (10) possédant un axe de symétrie (X-X'), séparée de façon étanche par au moins une structure de paroi mobile (12) en au moins une chambre avant (14) reliée en permanence à une source de basse pression, et au moins une chambre arrière (16) reliée sélectivement à la chambre avant (14) ou à une source de haute pression par un moyen de valve à trois voies actionnée par une tige de commande (30, 130), la valve à trois voies comportant un élément de clapet (36, 136) coopérant par une face annulaire (40, 140) avec un premier siège annulaire de clapet (34, 134) formé sur un plongeur (28, 128) coulissant dans un alésage (26, 126) d'un piston (20, 90), la face annulaire (40, 140) de l'élément de clapet étant sollicitée vers l'avant en direction du siège annulaire de clapet (34, 134) par un ressort de clapet (42, 142), **caractérisé en ce que** la valve à trois voies comporte un second élément de clapet (46, 146) coopérant par une face annulaire (50, 150) avec un second siège annulaire de clapet (44, 144) formé sur le plongeur (28, 128), la face annulaire (50, 150) du second élément de clapet (46, 146) étant sollicitée vers l'arrière en direction du second siège annulaire de clapet (44, 144) par un second ressort de clapet (52, 152).

2. Servomoteur pneumatique selon la revendication 1, **caractérisé en ce que** les premier (34, 134) et second (44, 144) sièges annulaires de clapet sont formés sur des épaulements radiaux (35, 45; 135, 145) du plongeur (28, 128).

3. Servomoteur pneumatique selon la revendication 2, **caractérisé en ce que** les premier (34, 134) et second (44, 144) sièges annulaires de clapet sont contenus dans des plans perpendiculaires à l'axe de symétrie (X-X', Y-Y') du plongeur (28, 128) et éloignés d'une distance axiale (D) prédéterminée.

4. Servomoteur pneumatique selon la revendication 3, **caractérisé en ce que** la valve à trois voies comporte de plus une structure de butée (60, 160) comprenant deux épaulements radiaux (62, 64; 162, 164) éloignés axialement d'une distance (L) légèrement inférieure à la distance axiale (D) entre les plans des premier (34, 134) et second (44, 144) sièges annulaires de clapet, pour déterminer la position extrême vers l'avant de l'élément de clapet (36, 136) et la position extrême vers l'arrière du second élément de clapet (46, 146).

5. Servomoteur pneumatique selon la revendication 4, **caractérisé en ce que** la structure de butée (60, 160) comporte des passages axiaux (66, 68; 166, 168) formés dans les épaulements radiaux (62, 64; 162, 164) et des ouvertures radiales (74, 174) formées entre les épaulements radiaux (62, 64; 162, 164), ces passages et ouvertures étant alignés en direction axiale avec des passages radiaux (76, 176) formés dans le piston (20, 90) et communiquant avec la chambre arrière du servomoteur.

6. Servomoteur pneumatique selon la revendication 5, **caractérisé en ce que** le piston (20, 90) comporte des passages axiaux (78, 178) débouchant dans l'alésage (26, 126) dans lequel coulisse le plongeur (28, 128) et communiquant avec la chambre avant du servomoteur, ces passages axiaux (78, 178) étant alignés avec les passages radiaux (76, 176) communiquant avec la chambre arrière du servomoteur.

7. Servomoteur pneumatique selon l'une quelconque des revendications précédentes, **caractérisé en ce que** la valve à trois voies est disposée dans une partie tubulaire arrière (22) du piston (20) solidaire de la structure de paroi mobile (12) du servomoteur.

8. Servomoteur pneumatique selon l'une quelconque des revendications 1 à 6, **caractérisé en ce que** la valve à trois voies est disposée dans un piston (90) d'un module de commande (100) pilotant à distance le servomofeur.

9. Servomoteur pneumatique selon la revendication 8, **caractérisé en ce que** le module de commande (100) comporte un piston étagé (90) divisant un alésage (88) en un premier volume (116) relié en permanence à la chambre arrière du servomoteur (300) par une canalisation (117), en un second volume (114) relié en permanence à la chambre avant du servomoteur (300) par une canalisation (115), et en une chambre annulaire d'assistance (92) reliée par une canalisation (119) à la sortie d'un émetteur de pression (400) actionné par le servomoteur.

## Patentansprüche

1. Pneumatischer Bremskraftverstärker, der ein Gehäuse (10) mit einer Symmetrieachse (X-X') aufweist, das in dichter Weise durch wenigstens eine bewegliche Wandstruktur (12) in wenigstens eine vordere Kammer (14), die stets mit einer Niederdruckquelle verbunden ist, und wenigstens in eine hintere Kammer (16) unterteilt ist, die wahlweise mit der vorderen Kammer (14) oder einer Hochdruckquelle durch eine Dreiwegeventil-Anordnung verbunden ist, die durch eine Steuerstange (30, 130) betätigt wird, wobei das Dreiwegeventil ein Ventilelement (36, 136) aufweist, das mittels einer ringförmigen Seite (40, 140) mit einem ersten, ringförmigen Ventilsitz (34, 134), zusammenwirkt, der auf einem Tauchkolben (28, 128) gebildet ist, der in einer Bohrung (26, 126) eines Kolbens (20, 90) gleitet, wobei die ringförmige Seite (40, 140) des Ventilelements nach vorn, in Richtung des ringförmigen Ventilsitzes (34, 134) durch eine Ventilfeder (42, 142) beaufschlagt ist, **dadurch gekennzeichnet, daß** das Dreiwegeventil ein zweites Ventilelement (46, 146) aufweist, das mittels einer ringförmigen Seite (50, 150) mit einem zweiten, ringförmigen Ventilsitz (44, 144) zusammenwirkt, der auf dem Tauchkolben (28, 128) gebildet ist, wobei die ringförmige Seite (50, 150) des zweiten Ventilelements (46, 146) nach hinten, in Richtung des zweiten, ringförmigen Ventilsitzes (44, 144), durch eine zweite Ventilfeder (52, 152) beaufschlagt ist.

2. Bremskraftverstärker nach Anspruch 1, **dadurch gekennzeichnet, daß** der erste ringförmige Ventilsitz (34, 134) und der zweite ringförmige Ventilsitz (44, 144) auf radialen Abstufungen (35, 45, 135, 145) des Tauchkolbens (28, 128) gebildet sind.

3. Bremskraftverstärker nach Anspruch 2, **dadurch gekennzeichnet, daß** der erste ringförmige Ventilsitz (34, 134) und der zweite ringförmige Ventilsitz (44, 144) in Ebenen enthalten sind, die senkrecht zu der Symmetrieachse (X-X', Y-Y') des Tauchkolbens (28, 128) und um eine vorbestimmte, axiale Distanz (D) beabstandet sind.

4. Bremskraftverstärker nach Anspruch 3, **dadurch gekennzeichnet, daß** das Dreiwegeventil außerdem eine Anschlagstruktur (60, 160) aufweist, die zwei radiale Abstufungen (62, 64; 162, 164) umfaßt, die um eine Distanz (L) voneinander beabstandet sind, die etwas kürzer ist, als die axiale Distanz (D) zwischen den Ebenen des ersten ringförmigen Ventilsitzes (34, 134) und des zweiten ringförmigen Ventilsitzes (44, 144), um die Endstellung nach vorn des Ventilelements (36, 136) und die Endstellung nach hinten des zweiten Ventilelements (46, 146) zu bestimmen.

5. Bremskraftverstärker nach Anspruch 4, **dadurch gekennzeichnet, daß** die Anschlagstruktur (60, 160) axiale Durchführungen (66, 68; 166, 168) aufweist, die in den radialen Abstufungen (62, 64; 162, 164) gebildet sind, und radiale Öffnungen (74, 174) aufweist, die zwischen den radialen Abstufungen (62, 64; 162, 164) gebildet sind, wobei diese Durchführungen und Öffnungen in axialer Richtung mit radialen Durchführungen (76, 176) fluchten, die in dem Kolben (20, 90) gebildet sind, und mit der hinteren Kammer des Bremskraftverstärkers verbunden sind.

6. Bremskraftverstärker nach Anspruch 5, **dadurch gekennzeichnet, daß** der Kolben (20, 90) axiale Durchführungen (78, 178) aufweist, die in die Bohrung (26, 126) münden, in der der Tauchkolben (28, 128) gleitet, und die mit der vorderen Kammer des Bremskraftverstärkers verbunden sind, wobei diese axialen Durchführungen (78, 178) mit den radialen Durchführungen (76, 176) fluchten, die mit der hinteren Kammer des Bremskraftverstärkers verbunden sind.

7. Bremskraftverstärker nach einem der vorstehenden Ansprüche, **dadurch gekennzeichnet, daß** das Dreiwegeventil in einem hinteren, röhrenförmigen Teil (22) des Kolbens (20) angeordnet ist, der fest mit der mobilen Wandstruktur (12) des Bremskraftverstärkers verbunden ist.

8. Bremskraftverstärker nach einem der Ansprüche 1 bis 6, **dadurch gekennzeichnet, daß** das Dreiwegeventil in einem Kolben (90) eines Steuermoduls (100) angeordnet ist, das den Bremskraftverstärker aus der Distanz steuert.

9. Bremskraftverstärker nach Anspruch 8, **dadurch gekennzeichnet, daß** das Steuermodul (100) einen abgestuften Kolben (90) aufweist, der eine Bohrung (88) in ein erstes Volumen (116), das durch einen Kanal (117) stets mit der hinteren Kammer des Bremskraftverstärkers (300) verbunden ist, und in ein zweites Volumen (114), das über einen Kanal (115) stets mit der vorderen Kammer des Bremskraftverstärkers (300) verbunden ist, sowie in eine ringförmige Hilfskammer (92) unterteilt, die über einen Kanal (119) mit dem Ausgang eines Druckgebers (400) verbunden ist, der über den Bremskraftverstärker betätigt wird.

## Claims

1. A pneumatic booster for braking assistance, comprising an envelope (10) having an axis of symmetry (X-X') separated sealingly by at least one movable partition structure (12) into at least one front chamber (14) connected permanently to a source of low pressure, and at. least one rear chamber (16) connected selectively to the front chamber (14) or to a source of high pressure through a three way valve means actuated by a control rod (30, 130), the three way valve comprising a valve member (36, 136) cooperating through an annular face (40, 140) with a first annular valve seat (34, 134) formed on a plunger (28, 128) which slides in a bore (26, 126) of a piston (20, 90), the annular face (40, 140) of the valve member being urged forwards in the direction of the annular valve seat (34, 134) by a valve spring (42, 142), **characterised in that** the three way valve comprises a second valve member (46, 146) which co-operates through an annular face (50, 150) with a second annular valve seat (44, 144) formed on the plunger (28, 128), the annular face (50, 150) of the second valve member (46, 146) being urged rearwards in the direction of the second annular valve seat (44, 144) by a second valve spring (52, 152).

2. A pneumatic booster according to claim 1, **characterised in that** the first (34, 134) and second (44, 144) annular valve seats are formed on radial shoulders (35, 45; 135, 145) of the plunger (28, 128).

3. A pneumatic booster according to claim 2, **characterised in that** the first (34, 134) and second (44, 144) annular valve seats are contained in planes perpendicular to the axis of symmetry (X-X', Y-Y') of the plunger (28, 128) and spaced apart by a predetermined axial distance (D).

4. A pneumatic booster according to claim 3, **characterised in that** the three way valve comprises in addition an abutment structure (60, 160) comprising two radial shoulders (62, 64; 162, 164) which are axially spaced apart by a distance (L) which is slightly less than the axial distance (D) between the planes of the first (34, 134) and second (44, 144) annular valve seats, to define the extreme forward position of the valve member (36, 136) and the extreme rearward position of the second valve member (46, 146).

5. A pneumatic booster according to claim 4, **characterised in that** the abutment structure (60, 160) comprises axial passages (66, 68; 166, 168) formed in the radial shoulders (62, 64; 162, 164) and radial openings (74, 174) formed between the radial shoulders (62, 64; 162, 164), these passages and openings being aligned in an axial direction with radial passages (76, 176) formed in the piston (20, 90) and communicating with the rear chamber of the booster.

6. A pneumatic booster according to claim 5, **characterised in that** the piston (20, 90) comprises axial passages (78, 178) which open into the bore (26, 126) in which the plunger (28, 128) slides, and which communicate with the front chamber of the booster, these axial passages (78, 178) being aligned with the radial passages (76, 176) which communicate with the rear chamber of the booster.

7. A pneumatic booster according to any one of the preceding claims, **characterised in that** the three way valve is disposed in a rear tubular part (22) of the piston (20) solid with the movable partition structure (12) of the booster.

8. A pneumatic booster according to any one of claims 1 to 6, **characterised in that** the three way valve is disposed in a piston (90) of a control module (100) which controls the booster remotely.

9. A pneumatic booster according to claim 8, **characterised in that** the control module (100) comprises a stepped piston (90) dividing a bore (88) into a first volume (116) connected permanently to the rear chamber of the booster (300) through a duct (117) and a second volume (114) connected permanently to the front chamber of the booster (300) through a duct (115) and an annular boost chamber (92) connected through a duct (119) to the outlet of a pressure generator (400) actuated by the booster.
